# EUROPEAN PATENT APPLICATION

(11) **EP 2 866 146 A1**
(43) Date of publication of application: **29.04.2015**
(21) Application number: 14178926.3
(22) Date of filing: 29.07.2014
(51) Int. Cl.: G06F 11/14, G06F 3/048, G06F 17/30

(54) **Method of providing a backup system assisting the user in backup restoration and related backup system**

(30) Priority: 24.10.2013 TW 102138522
(71) Applicant: Synology Incorporated, Taipei 103 (TW)
(72) Inventor: Kao, Wen-Yen, Taipei City 111 (TW); Huang, Xiao-Xuan, Yangmei City Taoyuan County 326 (TW); Lee, Wei-Cheng, New Taipei City 235 (TW); Hsu, Chih-Cheng, Pingtung City Pingtung County 900 (TW)
(74) Representative: Becker Kurig Straus

(57) **Abstract**

In a data backup system, multiple backup versions of each document are generated and a user interface having a search page and a browsing page is provided. The search page is arranged to display the file name, the backup time and the variation of a specific document. The browsing page is arranged to display the backup name, the backup time and the variation of a specific backup version. Searching for the specific document and the specific backup version may thus be performed efficiently.

## Description

### Field of the Invention

The present invention is related to a method of providing a backup system and a related backup system.

### Background of the Invention

In modern society, computer systems have become an essential part of daily life and are widely used to handle all sorts of tasks. A computer system is generally installed with backup software for data backup or restoration. The purpose of backup application is to recover data after its loss or to recover data from an earlier time. The user may copy important data or different backup versions of a file into a target device. In the unfortunate event of system corruption or erroneous deletion, the backup data stored in the target device may be used to restore the original data or a specific backup version in the computer system.

In a prior art backup system, the user may search a target document to be restored using a version searching page according to file name, file type or file time. After relevant search keywords have been inputted, all documents which match the keywords (name, type, and/or time) may then be displayed on the version searching page so that the user may select a specific document to be restored. Next, all backup versions and backup times of the specific document may be displayed on a version browsing page of the prior art backup system. After the user selects a specific backup version of the specific document, the user may browse the contents of different backup versions of the specific document on a preview page.

When the user intends to restore a specific backup version of a document, the decision is mostly based on how the specific backup version was updated (content added/deleted/amended), instead of the backup name or backup time of the specific backup version. The prior art backup system fails to allow the user to search and browse different backup versions efficiently since it only presents backup name, file type or backup time of the backup versions on its version searching page and the version browsing page. Meanwhile, when presenting a single backup version, the prior art backup system only allows the user to preview the contents of different backup versions, but fails to present the differences between these backup versions. Since a specific document can be backed up several times without any update made to its original content, the user may spend a lot of time on previewing many backup versions with identical contents.

Therefore, there is a need to allow the user to search and browse different backup versions more efficiently.

### Summary of the Invention

The present invention is a method of providing a backup system and a backup system which allow the user to search and browse different backup versions efficiently.

This is achieved by methods of providing a backup system according to claims 1 and 11 and by a backup system according to claim 14. The dependent claims pertain to corresponding further developments and improvements.

As will be seen more clearly from the detailed description following below, the claimed method of providing a backup system includes providing a plurality of backup versions by backing up a specific document at a plurality of respective backup times; displaying a first backup name, a first backup time and a first variation of a first backup version among the plurality of backup versions on a version browsing page of a user interface; and displaying a second backup name, a second backup time and a second variation of a second backup version among the plurality of backup versions on the version browsing page. The second backup time is later than the first backup time. The second backup time is closest to the first backup time among all backup times which are later than the first backup time. The second variation is associated with a difference in content between that of the second backup version and that of the first backup version.

As will be seen more clearly from the detailed description following below, the claimed method of providing a backup system includes backing up a plurality of documents at a plurality of backup times for providing a plurality of backup versions of each document; searching the plurality of documents based on a keyword if a specific document among the plurality of documents matches the keyword, displaying a name of the specific document, a first backup time and a first variation of a first backup version among the plurality of backup versions of the specific document, and a second backup time and a second variation of a second backup version among the plurality of backup versions of the specific document on a version search page of a user interface. The second backup time is later than the first backup time. The second backup time is closest to the first backup time among all backup times which are later than the first backup time. The second variation is associated with a difference between a content of the second backup version and a content of the first backup version.

As will be seen more clearly from the detailed description following below, the claimed backup system includes a memory, a storage unit, a computing unit, and a screen. The memory is installed with backup software for providing a plurality of backup versions by backing up a specific document at a plurality of respective backup times. The storage unit is configured to store a first backup name, a first backup time and a first variation of a first backup version among the plurality of backup versions and store a second backup name, a second backup time and a second variation of a second backup version among the plurality of backup versions. The computing unit is configured to acquire the second variation based on a difference in content between that of the second backup version and that of the first backup version. The screen is configured to display the first backup name, the first backup time and the first variation on a version browsing page of a user interface, and display the second backup name, the second backup time and the second variation. The second backup time is later than the first backup time. The second backup time is closest to the first backup time among all backup times which are later than the first backup time.

### Brief Description of the Drawings

In the following, the invention is further illustrated by way of example, taking reference to the accompanying drawings.
FIG. 1 is a functional diagram of an electronic device with a data backup system according to the present invention.
FIGs. 2-11 are diagrams illustrating methods of providing a data backup system according to embodiments of the present invention.

### Detailed Description

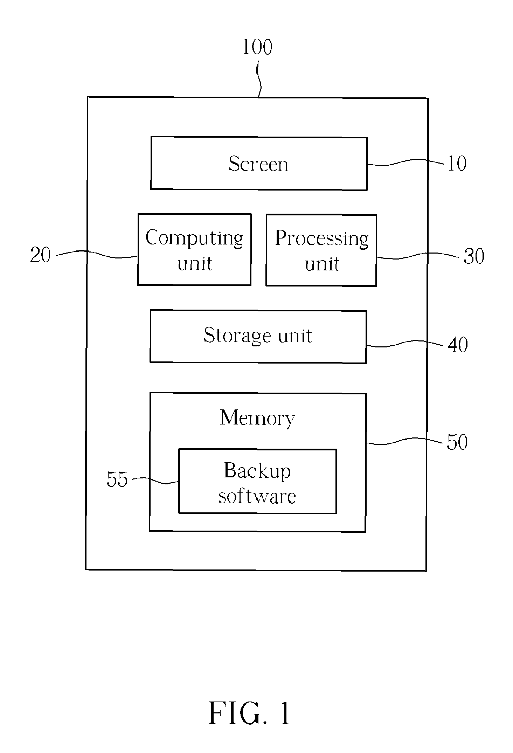

FIG. 1 is a functional diagram of an electronic device 100 with a data backup system according to the present invention. The electronic device 100 includes a screen 10, a computing unit 20, a processing unit 30, a storage unit 40, and a memory 50. Using backup software 55 installed in the memory 50, multiple backup versions of a specific document may be generated and stored under corresponding backup names and backup times. The computing unit 20 is configured to compare the contents of different backup versions of the specific document, thereby acquiring the corresponding versions' variations. The storage unit 40 is used for storing backup information of different documents, such as the backup content, the backup name, the backup time and the version's variation of a specific version of the specific document. The processing unit 30 is configured to search the storage unit 40 based on keywords associated with backup name and/or backup time, thereby providing corresponding documents and related backup information. When executing the backup software 55, the electronic device 100 may provide a user interface displaying a version search page or a version browsing page on the screen 10.

In the embodiment of the present invention, the backup software 55 may be stored in a hard disc, a memory card or non-volatile memory including, but not limited to, read only memory (ROM). When the electronic device 100 is instructed to perform data backup, the backup software 55 may then be uploaded to the memory 50.

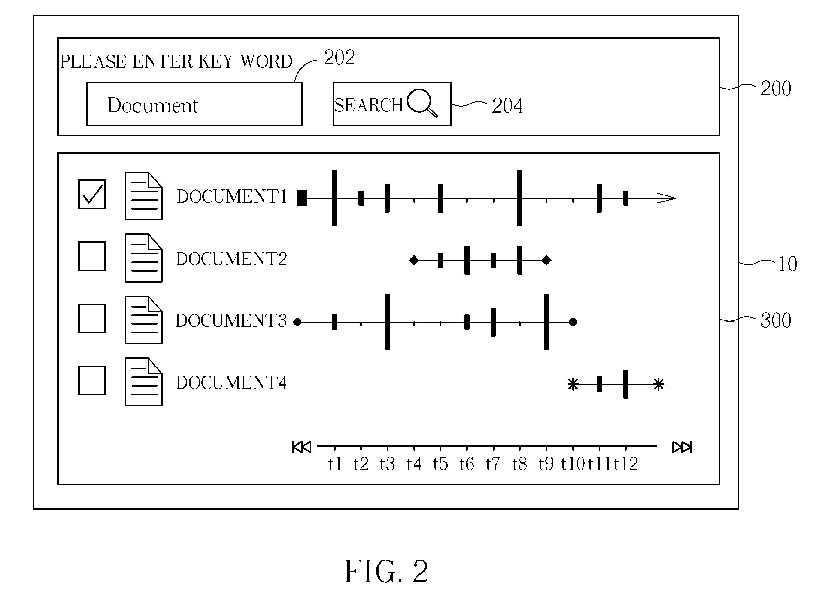

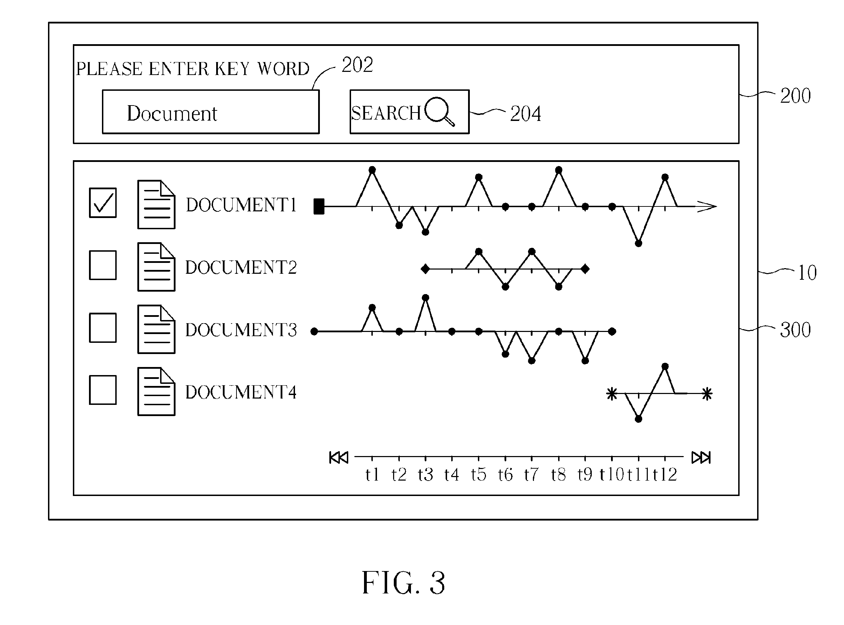

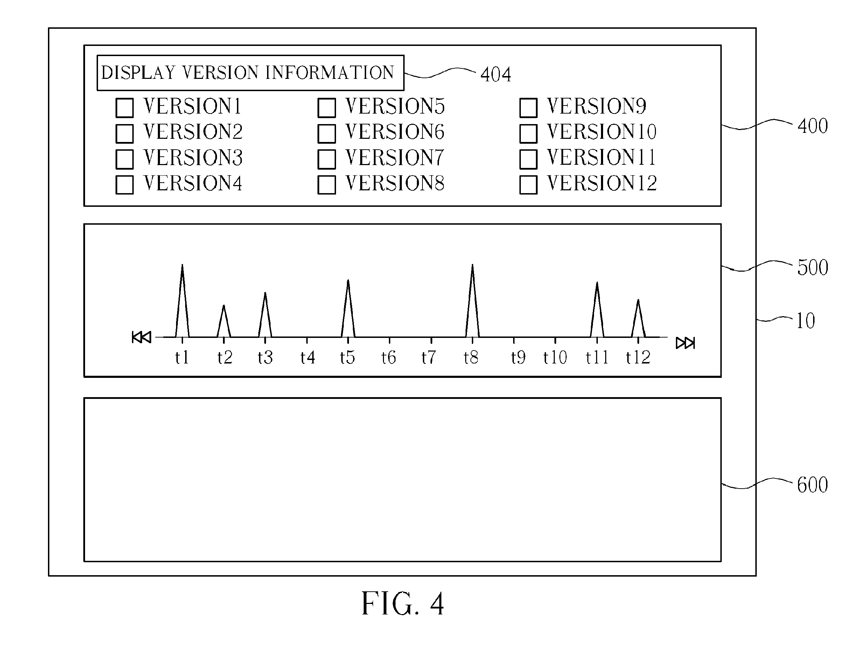

FIGs. 2-11 are diagrams illustrating methods of providing a data backup system according to embodiments of the present invention. FIGs. 2 and 3 illustrate the version search page displayed on the user interface when executing the backup software 55. FIGs. 4-11 illustrate the version browsing page displayed on the user interface when executing the backup software 55.

In the embodiments illustrated in FIGs. 2 and 3, the version search page displayed on the screen 10 includes a search field 200 and a display field 300. The user may type one or more keywords into an input region 202 in the search field 20 and click on a search button 204. The processing unit 30 may then access the storage unit 40 for data associated with the keywords and display all relevant documents and backup information in the display field 300. Assume that the processing unit 30 is able to acquire 4 documents associated with the keyword "document" from the storage unit 40, the present invention may display the names of the documents "DOCUMENT1", " DOCUMENT2", " DOCUMENT3" and " DOCUMENT4", as well as their corresponding backup information on the version search page. The backup information of each document may be presented using the backup time and the version's variation on the timeline. In the embodiment illustrated in FIG. 2, a specific period between backup time t1-t12 is depicted in the display field 300, wherein the version's variation of each document is presented in a histogram and the bar heights at different backup time are proportional to the absolute values of the versions' variations of the corresponding backup versions. In the embodiment illustrated in FIG. 3, a specific period between backup time t1-t12 is depicted in the display field 300, wherein the version's variation of each document is presented in a line chart and the marker heights at different backup time are proportional to the values of the versions' variations of the corresponding backup versions. The user may adjust the start and the end of the specific period using a control button (represented by the double-arrows) displayed on the bottom of the display field 300. The method of calculating the version's variations will be explained in more details in subsequent paragraphs.

As depicted in FIGs. 2 and 3, the present invention can present the life cycle of each backup version of a specific document displayed on the version search page so that the user can easily view the backup history of the specific document. For example, the life cycle of DOCUMENT1, whose range is indicated by square markers, starts at the backup time t1 and ends at a specific backup time after the backup time t12 (not shown); the life cycle of DOCUMENT2, whose range is indicated by rhombus markers, starts at the backup time t5 and ends at the backup time t8; the life cycle of DOCUMENT3, whose range is indicated by round markers, starts at the backup time t1 and ends at the backup time t9; the life cycle of DOCUMENT4, whose range is indicated by star markers, starts at the backup time t11 and ends at the backup time t12. Also, the bars or lines may adopt bold font or specific colors to indicate the existence of specific documents in the embodiments illustrated in FIGs. 2 and 3.

In the embodiments illustrated in FIGs. 4-7, the version browsing page displayed on the screen 10 includes a name field 400, a backup information field 500 and a preview field 600. Assuming that the user has selected DOCUMENT1 in the embodiment illustrated in FIG. 2 or FIG. 3, the present invention may then display the version browsing page on the screen 10, wherein the backup names (such as VERSION1-VERSION12) of the backup versions associated with DOCUMENT1 which are generated during the specific period are shown in the name field 400, and the backup time and the version's variation of each backup version is shown in the backup information field 500. The user may adjust the start and the end of the specific period using a control button (represented by the double-arrows) displayed in the backup information field 500.

In the present invention, the version's variation of a current backup version may be calculated according to the content difference between the current backup version and a previous backup version, wherein the previous backup version is the latest version generated before the current backup version. For example, the version's variation of VERSION5 may be calculated by comparing the content difference between VERSION5 and VERSION4 and then presented in different manners. The backup system according to the present invention may adopt various methods of calculating and presenting the versions' variations, which will be explained in more details in subsequent paragraphs.

In the embodiment illustrated in FIG. 4, a line chart is used for presenting the versions' variations. At a specific backup time, an apex of a larger value indicates that the version's variation of a corresponding backup version has a larger absolute value, an apex of zero indicates that the corresponding backup version is the same as its previous backup version, and an apex of a smaller value indicates that the version's variation of the corresponding backup version has a smaller absolute value. Also, the lines may adopt bold font or specific colors to mark the versions' variations (not shown).

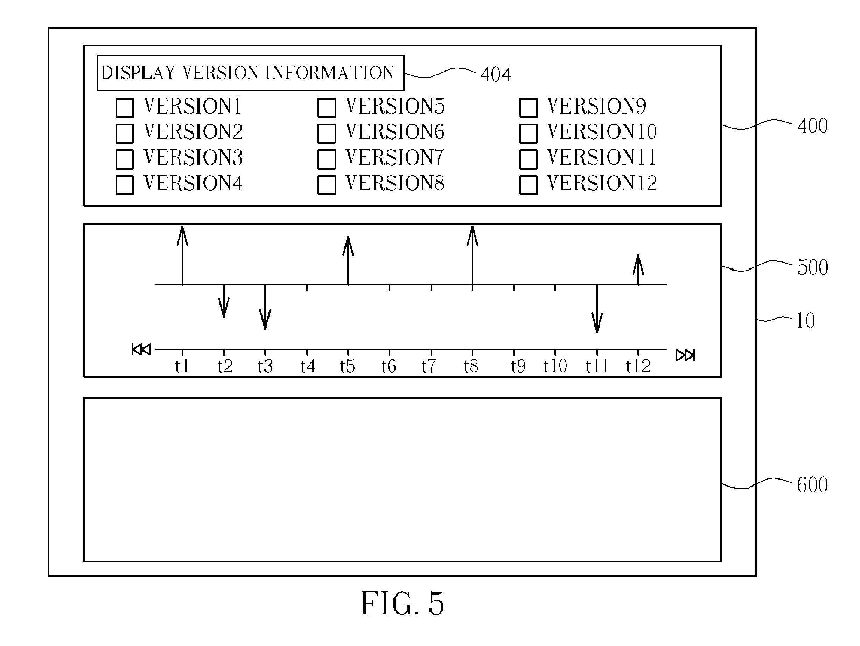

In the embodiment illustrated in FIG. 5, arrows are used for presenting the versions' variations. At a specific backup time, a longer arrow indicates that the version's variation of a corresponding backup version has a larger absolute value, an arrow of zero length indicates that the corresponding backup version is the same as its previous backup version, and a shorter arrow indicates that the version's variation of the corresponding backup version has a smaller absolute value. The direction of an arrow indicates whether the content of the corresponding backup version is increased or decreased with respect to its previous backup version. For example, at the backup time t5, the upward arrow associated with DOCUMENT5 indicates that DOCUMENT5 includes more content than DOCUMENT4; at the backup time t11, the downward arrow associated with DOCUMENT11 indicates that DOCUMENT11 includes less content than DOCUMENT10. Also, the arrows may adopt bold font or specific colors to mark the versions' variations (not shown).

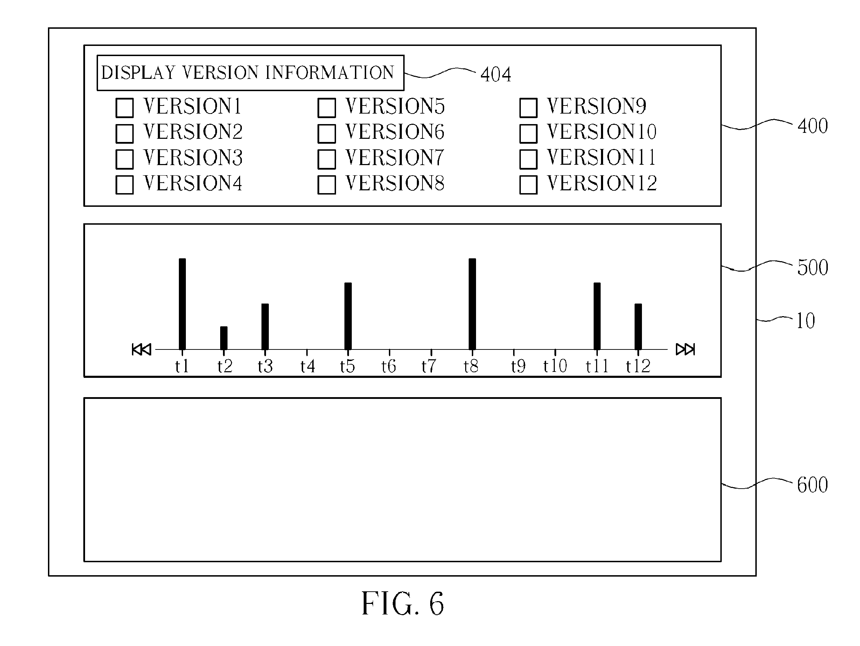

In the embodiment illustrated in FIG. 6, a histogram is used for presenting the version's variations. At a specific backup time, a longer bar indicates that the version's variation of a corresponding backup version has a larger absolute value, a bar of zero height indicates that the corresponding backup version is the same as its previous backup version, and a shorter bar indicates that the version's variation of the corresponding backup version has a smaller absolute value. Also, the bars may adopt bold font or specific colors to mark the versions' variations (not shown).

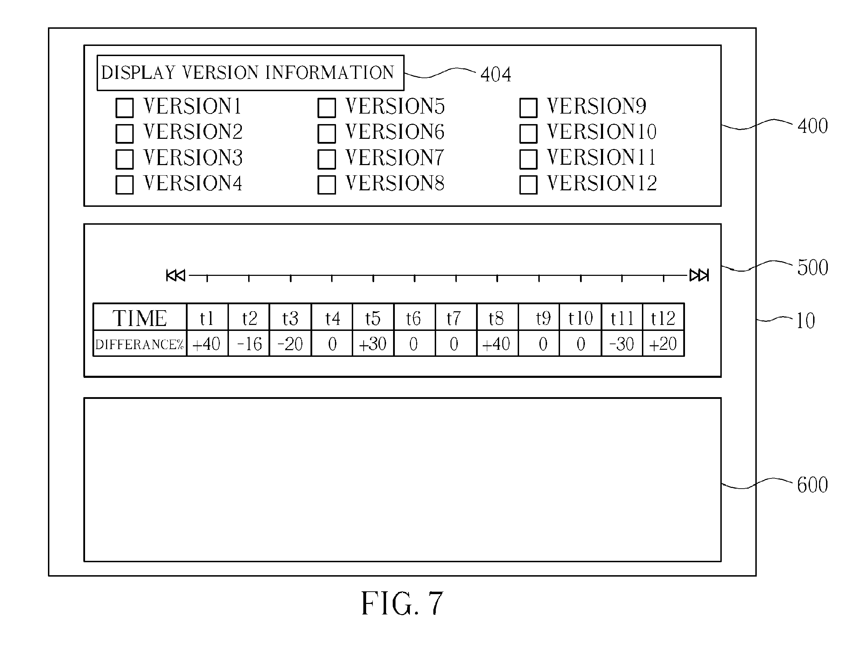

In the embodiment illustrated in FIG. 7, numbers are used for presenting the versions' variations. At a specific backup time, a larger number indicates that the version's variation of a corresponding backup version has a larger absolute value, a number of zero indicates that the corresponding backup version is the same as its previous backup version, and a smaller number indicates that the version's variation of the corresponding backup version has a smaller absolute value. The plus sign indicates that a corresponding backup version includes more content than its previous backup version, and the minus sign indicates that the corresponding backup version includes less content than its previous backup version. For example, at the backup time t5, the number "+30" associated with DOCUMENT5 indicates that the content of DOCUMENT5 is about 130% of the content of DOCUMENT4; at the backup time t11, the number "-30" associated with DOCUMENT11 indicates that the content of DOCUMENT11 is about 70% of the content of DOCUMENT10. Also, the numbers may adopt bold font or specific colors to mark the versions' variations (not shown).

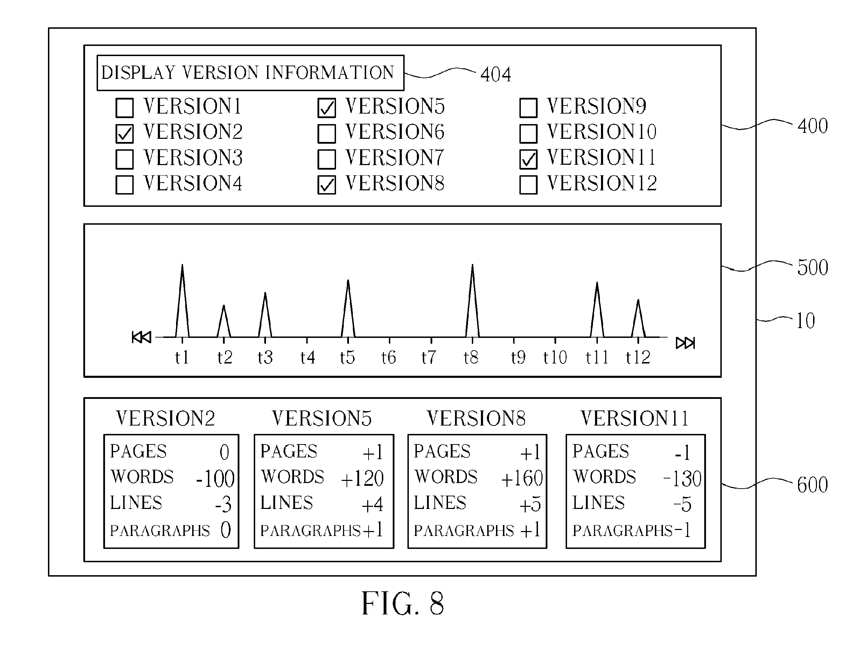

Assuming that after reviewing the display content of the backup information field 500 in the embodiments illustrated in FIGs. 4-7, the user decides to restore DOCUMENT1 based on one of VERSION 2, VERSION5, VERSION 8 and VERSION11. The user can select the backup names of corresponding backup versions shown in the name field 400 and then click on an execution button 404. Next, the present invention may display the versions' variations of all selected versions in the preview field 600, as depicted in FIGs. 8-11.

In the embodiment illustrated in FIG. 8, DOCUMENT1 is a text file whose version's variation may be calculated according to the percentage of new/deleted/amended characters of a specific backup version with respect to its previous backup version. The difference in the number of pages, words, lines or paragraphs may be displayed in the preview field 600. For example, VERSION5 includes more content than VERSION4 by an amount of 1 page, 120 words, 4 lines and 1 paragraph, while VERSION11 includes less content than VERSION10 by an amount of 1 page, 130 words, 5 lines or 1 paragraph. Although the embodiment of FIG. 8 only depicts the summarized information of the difference in pages, words, lines or paragraphs of a text file, the present invention may also provide the detailed information when presenting the versions' variations. In an embodiment, "+AA" may be displayed to indicate that AA has been added to the specific backup version with respect to its previous backup version, "-B" may be displayed to indicate that B in the previous backup version has been deleted in the specific backup version, "CCC" may be displayed to indicate that CCC has been added to the specific backup version with respect to the previous backup version, and " 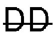 " may be displayed to indicate that DD in the previous backup version has been deleted in the specific backup version. In another embodiment, if the specific backup version includes a lot of new content, the present invention may only display the first few characters and represent the rest of the new content using an ellipsis. The above mentioned summarized and detailed information of the versions' variations may be simultaneously displayed, or alternatively displayed based on user input. The present invention may also present the detailed information of a specific version's variation in a pop-up window when the user clicks on the corresponding summarized information. However, the various methods of presenting the versions' variations as discussed above are merely for illustrative purposes, but do not limit the scope of the present invention.

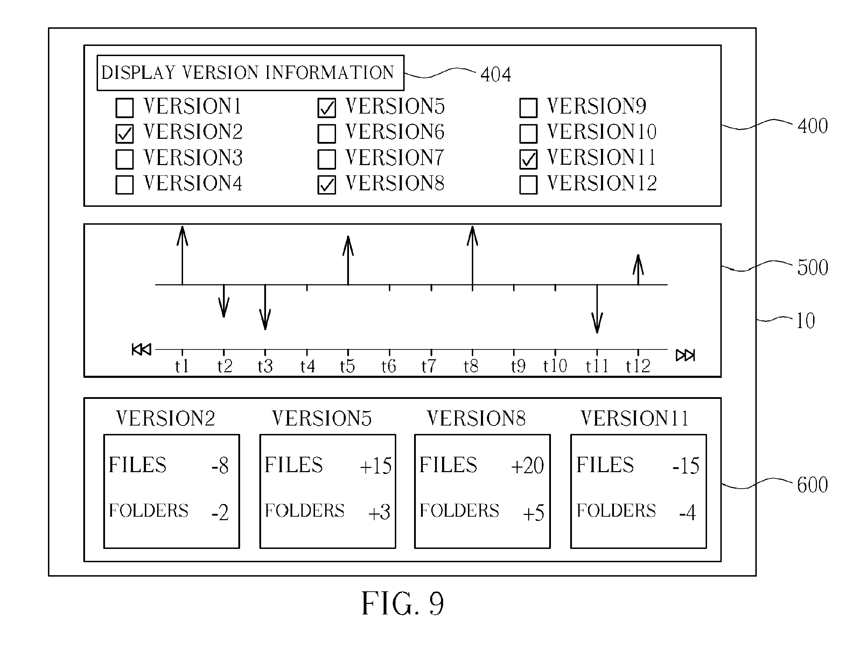

In the embodiment illustrated in FIG. 9, DOCUMENT1 is a folder containing one or multiple files or a zip file containing one or multiple files and/or folders whose version's variation may be calculated according to the percentage of new/deleted/amended files or folders of a specific backup version with respect to its previous backup version. The difference in the number of folders or files may be displayed in the preview field 600. For example, VERSION5 includes more content than VERSION4 by an amount of 15 files and 3 folders, while VERSION11 includes less content than VERSION10 by an amount of 15 files and 4 folders.

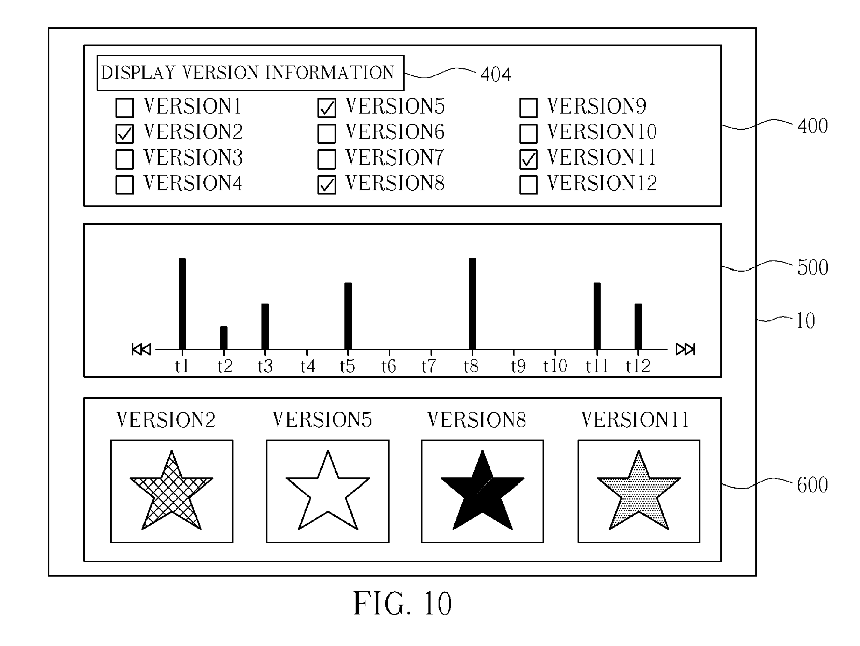

In the embodiment illustrated in FIG. 10, DOCUMENT1 is an image file whose version's variation may be calculated according to the difference in one or more image parameters (contrast, chrominance or brightness) of a specific backup version with respect to its previous backup version. The preview of the selected backup version may be displayed in the preview field 600.

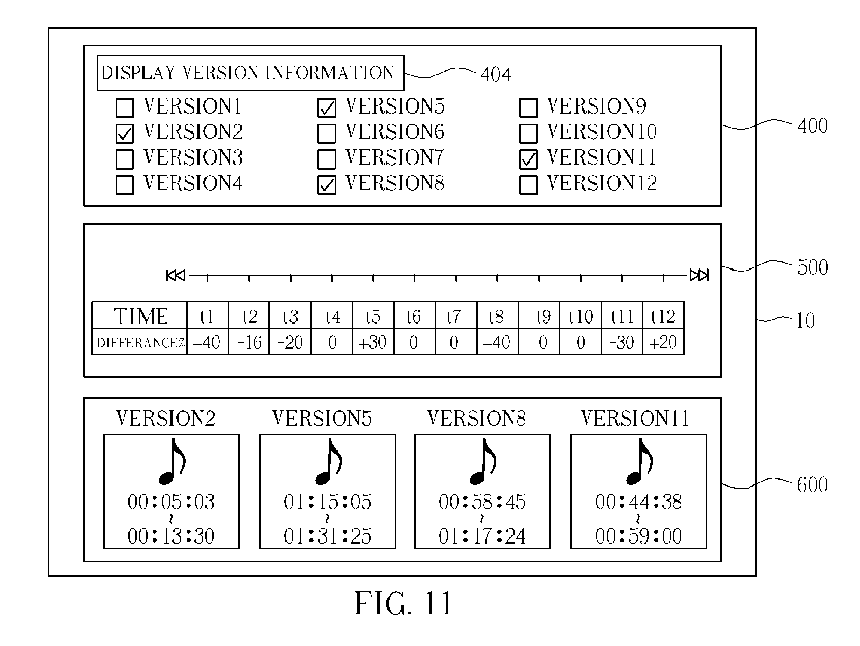

In the embodiment illustrated in FIG. 11, DOCUMENT1 is a multimedia file (video or audio) whose version's variation may be calculated according to the content of a specific backup version which is broadcast at different time points with respect to its previous backup version. The period during which the specific backup version and its previous backup version have different multimedia content may be displayed in the preview field 600. For example, VERSION5 differs from VERSION4 in the content broadcast between playtime "1 h 15m 5s" to playtime "1 h 31m 25s", while VERSION11 differs from VERSION10 in the content broadcast between playtime "44m 38s" to playtime "59m 00s". The backup software 55 may directly broadcast the content of the specific backup version which is different from its previous backup version when the user selects the specific version's variation.

In the embodiments illustrated in FIGs. 4-11, the present invention may allow the user to select one or more specific backup versions in the name field 400 and then display the version's variation of the one or more selected backup versions in the preview field 600. In another embodiment, the present invention may display the version's variations of all backup versions of a specific document in the preview field 600 and then allow the user to unselect one or more specific backup versions from the name field 400 (the execution button 404 may depict "HIDE THE VERSION VARIATION"), thereby removing the version's variation of the one or more unselected backup versions from the preview field 600.

The present invention may adopt various methods for calculating the content difference between different backup versions, thereby acquiring corresponding versions' variations. In addition to the previously illustrated methods applied to text files, folders, zip files, image files and multimedia files, the version's variation associated with each type of document may be acquired using a general method. More specifically, the present invention may open two consecutive backup versions of a specific document, regardless of the file type, in a binary mode, compare the two consecutive backup versions for acquiring the number of file sectors which contain updated data, and then calculate the version's variation accordingly. However, the various methods of acquiring the versions' variations as discussed above are merely for illustrative purposes, but do not limit the scope of the present invention.

In an embodiment of the present invention, the backup software 55 may calculate the version's variation of a specific backup version immediately after generating the specific backup version from a specific document, and then store the backup content, backup name, backup time and the version's variation in the storage unit 40. In another embodiment of the present invention, the version's variation of a specific backup version may be calculated on a real time basis after receiving a user command associated with searching or browsing backup versions, such as after the user clicks the search button 202 depicted in FIGs. 2-3 or the execution button 404 in FIGs. 4-11.

The present invention may adopt various methods for presenting the values of the version's variation. The above-mentioned methods using lines, arrows, bars and numbers are merely for illustrative purposes, but do not limit the scope of the present invention. Meanwhile, the present invention may also use characters/numbers/images with different display attributes (font family, font size, font weight, font style, font variant, color or effect) for presenting the version variation

The present invention may adopt various methods for presenting the content of the versions' variation. The above-mentioned methods displaying the difference in the number of characters/files/folders, the preview of image files or broadcasting the period which involves different multimedia content are merely for illustrative purposes, but do not limit the scope of the present invention.

In an embodiment, the user interface may be provided by displaying a single version search page or a single version browsing page on the screen 10. In another embodiment, the user interface may be provided by simultaneously displaying the version search page and the version browsing page on the screen 10 using picture-in-picture (PIP), picture-on-picture (POP) or pop-up techniques. The arrangements of the version search page and the version browsing page, such as the content/appearance/location of the search field 200, the display field 300, the name field 400, the backup information field 500 and the preview field 600, may vary in different applications. The embodiments illustrated in FIGs. 2-11 are merely for illustrative purposes, but do not limit the scope of the present invention.

In the present method of providing a backup system and the present backup system, the backup content, the backup name, the backup time and the version's variation of each backup version of a specific document are presented on a user interface. Therefore, the user can search and browse different backup versions efficiently.

## Claims

1. A method of providing a backup system in which a plurality of backup versions are provided by backing up a specific document at a plurality of respective backup times, the method **characterized in that** it comprises the steps of:
displaying a first backup name, a first backup time and a first variation of a first backup version among the plurality of backup versions on a version browsing page of a user interface; and
displaying a second backup name, a second backup time and a second variation of a second backup version among the plurality of backup versions on the version browsing page, wherein:
the second backup time is later than the first backup time;
the second backup time is closest to the first backup time among all backup times which are later than the first backup time; and
the second variation is associated with a difference between a content of the second backup version and a content of the first backup version.

2. The method of claim 1, **further characterized by** comprising the further step of:
acquiring the second variation by calculating the difference between the content of the second backup version and the content of the first backup version at the second backup time after providing the second backup version.

3. The method of claim 1, **further characterized by** comprising the further step of:
acquiring the second variation by calculating the difference between the content of the second backup version and the content of the first backup version after receiving a command which is associated with displaying the plurality of backup versions.

4. The method of any of claims 1-3, **characterized in that** displaying the first variation or the second variation on the version browsing page includes displaying a line, an arrow, a bar or a number which indicates at least an amount of, an increase in or a decrease in the first variation or the second variation on the version browsing page.

5. The method of any of claims 1-4, **further characterized by** comprising the further step of:
displaying a content of the second variation on the version browsing page after receiving a command which is associated with browsing the second backup version.

6. The method of claim 5, **characterized in that** displaying the content of the second variation includes displaying a difference in an amount of characters, an amount of files, an amount of folders, an image parameter or a multimedia content of the second backup version with respect to the first backup version.

7. The method of claim 5, **characterized in that** displaying the content of the second variation includes simultaneously displaying summarized information or detailed information regarding a difference in an amount of characters contained in the second backup version with respect to the first backup version, or alternatively switching between displaying the summarized information or the detailed information.

8. The method of claim 5 or 6, **characterized in that** displaying the content of the second variation includes displaying summarized information regarding a difference in a multimedia content of the second backup version with respect to the first backup version, and broadcasting detailed information regarding the difference in the multimedia content after receiving a command which is associated with browsing the summarized information.

9. The method of any of claims 1-8, **further characterized by** comprising the further steps of:
providing a plurality of backup versions by backing up a plurality of documents;
searching the plurality of documents based on a keyword; and
displaying a name of the specific document, the first backup time, the first variation, the second backup time, the second variation on a version search page of the user interface if the specific document matches the keyword.

10. The method of claim 9, **further characterized by** comprising the further step of:
marking a life cycle of the plurality of backup versions on the version search page.

11. A method of providing a backup system in which a plurality of documents are backed up at a plurality of backup times for providing a plurality of backup versions of each document and the plurality of documents are searched based on a keyword, the method **characterized in that** it comprises the step of:
selecting a specific document if the specific document among the plurality of documents matches the keyword;
displaying a name of the specific document, a first backup time and a first variation of a first backup version among the plurality of backup versions of the specific document, and a second backup time and a second variation of a second backup version among the plurality of backup versions of the specific document on a version search page of a user interface, wherein:
the second backup time is later than the first backup time;
the second backup time is closest to the first backup time among all backup times which are later than the first backup time; and
the second variation is associated with a difference between a content of the second backup version and a content of the first backup version.

12. The method of claim 11, **further characterized by** comprising the further step of:
acquiring the second variation by calculating the difference in between the content of the second backup version and the content of the first backup version at the second backup time after providing the second backup version.

13. The method of claim 11 or 12, **further characterized by** comprising the further step of:
marking a life cycle of the plurality of backup versions on the version search page.

14. A backup system comprising a memory installed with backup software for providing a plurality of backup versions by backing up a specific document at a plurality of respective backup times, , the backup system **characterized by**:
a storage unit configured to store a first backup name, a first backup time and a first variation of a first backup version among the plurality of backup versions and store a second backup name, a second backup time and a second variation of a second backup version among the plurality of backup versions;
a computing unit configured to acquire the second variation based on a difference between a content of the second backup version and a content of the first backup version; and
a screen configured to display the first backup name, the first backup time and the first variation on a version browsing page of a user interface, and display the second backup name, the second backup time and the second variation, wherein:
the second backup time is later than the first backup time; and
the second backup time is closest to the first backup time among all backup times which are later than the first backup time.

15. The backup system of claim 14, **further characterized by:**
a processing unit configured to determine whether the specific document matches the keyword, wherein the screen is further configured to display a name of the specific document, the first backup time, the first variation, the second backup time and the second variation on a version search page of the user interface and mark a life cycle of the plurality of backup versions on the version search page.
